# EUROPÄISCHE PATENTSCHRIFT

(11) **EP 2 946 918 B1**
(45) Veröffentlichungstag und Bekanntmachung des Hinweises auf die Patenterteilung: **23.12.2020**
(21) Anmeldenummer: 15001510.5
(22) Anmeldetag: 20.05.2015
(51) Int. Cl.: B32B 5/00, B32B 5/02, B32B 5/10, B32B 7/00, B32B 7/04, B32B 19/02, B32B 19/04, B32B 25/00, B32B 25/02, B32B 25/16, B32B 27/00, B32B 27/06, B32B 27/08, B32B 27/12, B32B 27/18, B32B 27/28

(54) **SANDWICHBAUTEIL SOWIE VERFAHREN ZUR HERSTELLUNG EINES SANDWICHBAUTEILS**
SANDWICH COMPONENT AND METHOD FOR PRODUCING A SANDWICH COMPONENT
COMPOSANT SANDWICH ET PROCÉDÉ DE FABRICATION D'UN COMPOSANT SANDWICH

(30) Priorität: 23.05.2014 DE 102014007510
(43) Veröffentlichungstag der Anmeldung: 25.11.2015
(73) Patentinhaber: Airbus Defence and Space GmbH, 82024 Taufkirchen (DE)
(72) Erfinder: Grünewald, Jonas, 81547 München (DE); Parlevliet, Patricia, 81539 München (DE)

(56) Entgegenhaltungen:
- EP-A1- 2 439 068
- DE-A1- 4 118 286
- DE-A1- 4 208 812
- DE-A1-102012 023 753
- US-A1- 2013 236 688

## Beschreibung

Die vorliegende Erfindung betrifft ein Sandwichbauteil, also ein Bauteil, bei dem Werkstoffe mit verschiedenen Eigenschaften in Schichten zusammengesetzt sind, wobei diese Werkstoffschichten zumindest zwei Deckschichten und einen dazwischen angeordneten Kern umfassen. Ferner betrifft die Erfindung ein Verfahren zur Herstellung eines Sandwichbauteils.

Bekannte Sandwichbauteile besitzen zumeist einen relativ dicken, jedoch leichtgewichtigen Kern, der zwischen zwei demgegenüber dünneren, jedoch mechanisch stabileren Deckschichten angeordnet und mit diesen Deckschichten verbunden (z. B. verklebt) ist.

Derartige, in Sandwichbauweise gefertigte Bauteile können besonders vorteilhaft im Leichtbau eingesetzt werden, beispielsweise als Komponenten im Flugzeugbau.

Bei bekannten Sandwichbauteilen besteht der Kern oftmals aus einem Schaumstoff, oder z. B. aus einer so genannten Wabenstruktur (z. B. aus Papier, Pappe, Kunststoff oder Metall). Als Deckschichten werden im Stand der Technik unter anderem z. B. Metallblech, Holz bzw. Sperrholz oder Faserverbundwerkstoffe eingesetzt.

Die US 2013/0236688 A1 beschreibt ein Sandwichbauteil mit mindestens einer Deckschicht aus verstärkten Faserstoffen und einem Kern, der aus einer Wabenstruktur bestehend aus einem Material auf Basis von Cellulose gebildet ist.

Die EP 2 439 068 A1 beschreibt ein Sandwichbauteil mit einem Kern aus einem thermoplastischen Faserverbundwerkstoff und einer wärmeverformbaren thermoplastischen Formmaterialschicht.

Die DE 42 08 812 A1 beschreibt eine Vorrichtung und ein Verfahren zum Herstellen einer als Sandwichbauteil ausgestalteten Leichtbauplatte, wobei sowohl ein Kern als auch Deckschichten des Sandwichbauteils aus thermoplastisch miteinander verbindbaren Materialien bestehen und miteinander verschmolzen werden.

Die DE 41 18 286 C2 beschreibt ein Verfahren zur Herstellung eines Sandwichbauteils mit einem Kern, der vorzugsweise als Hexagonalwabenstruktur ausgebildet ist.

Die DE 10 2012 023753 A1 beschreibt ein ballistisches Schutzbauteil zum Schutz vor eindringenden Fremdkörpern mit einer ersten, einer zweiten und einer Zwischenschicht, die aus einer Zwischenlage aus einem Kernmaterial und wenigstens einer Lage aus ballistischem Schutzmaterial gebildet ist.

Ein grundsätzliches Problem bei der Herstellung eines Sandwichbauteils besteht darin, im Hinblick auf die Stabilität des fertigen Bauteils eine möglichst gute (mechanisch belastbare) Anbindung der Deckschichten an den Kern zu erzielen.

Eine Möglichkeit hierfür ist eine "adhäsive Anbindung", d. h. das Verbinden des Kerns mit den Deckschichten mit Hilfe eines Klebstoffes oder einer Klebeschmelzschicht.

Je nach Beschaffenheit der miteinander zu verklebenden Materialien ergibt sich bei diesem Verfahren jedoch oftmals der Nachteil einer unzureichenden Festigkeit der auf Adhäsion beruhenden Verbindung.

Zur Vermeidung dieses Nachteils kommt in Betracht, die Deckschichten durch eine "kohäsive Anbindung" mit dem Kern zu verbinden, d. h. durch eine Schmelzverbindung zwischen Kern- und Deckschichten, ohne Verwendung eines Zusatzmaterials. Hierfür werden die aneinander angrenzenden Materialien erweicht bzw. aufgeschmolzen, unter Druck verbunden, und wieder verfestigt.

Abgesehen davon, dass diese kohäsive Anbindung die Auswahl erweich- bzw. aufschmelzbarer und darüber hinaus entsprechend kompatibler (miteinander verschmelzbarer) Werkstoffe voraussetzt, ergibt sich bei diesem Verfahren in der Praxis oftmals der gravierende Nachteil (bzw. ein Grund, dieses Verfahren nicht anzuwenden), der darin besteht, dass durch das Erweichen bzw. Aufschmelzen der Materialien und das Zusammenfügen unter Druck die Deckschichten und/oder der Kern beschädigt werden.

Dieses Problem ist z. B. besonders gravierend, wenn als Kern eine aus einem Thermoplastmaterial gebildete Wabenstruktur eingesetzt werden soll. Eine zur Schaffung einer kohäsiven Anbindung eingesetzte Temperatur- und Druckbeaufschlagung eines solchen Wabenkerns führt in der Regel zu einer unerwünschten und nachteiligen Verformung bzw. zu einem "Kollabieren" der Wabenstruktur.

Es ist eine Aufgabe der vorliegenden Erfindung, ein Sandwichbauteil sowie ein Verfahren zur Herstellung eines Sandwichbauteils anzugeben, bei welchen die vorstehenden Probleme vermieden sind.

Diese Aufgabe wird erfindungsgemäß durch ein Sandwichbauteil nach Anspruch 1 bzw. ein Herstellungsverfahren nach Anspruch 4 gelöst. Die abhängigen Ansprüche betreffen vorteilhafte Weiterbildungen der Erfindung.

Das erfindungsgemäße Sandwichbauteil umfasst eine erste Deckschicht, eine zweite Deckschicht und einen dazwischen angeordneten Kern, wobei die Deckschichten jeweils aus einer Außenlage aus einem faserverstärkten höher schmelzenden Thermoplastmaterial und damit verschmolzen einer Innenlage aus einem niedriger schmelzenden Thermoplastmaterial gebildet sind, wobei der Kern Außenlagen aufweist, die jeweils aus einem niedriger schmelzenden Thermoplastmaterial gebildet sind, und eine Innenstruktur, die ganz oder teilweise aus einem höher schmelzenden Thermoplastmaterial gebildet ist, und wobei die Innenlagen der Deckschichten mit jeweils einer der Außenlagen des Kerns verschmolzen sind.

Bei dem erfindungsgemäßen Verfahren zur Herstellung eines derartigen Sandwichbauteils werden zunächst die erste Deckschicht, die zweite Deckschicht und der Kern bereitgestellt (vorgefertigt), sodann der Kern zwischen den Deckschichten angeordnet, und schließlich die Innenlagen der Deckschichten mit jeweils einer der Außenlagen des Kerns verschmolzen.

Der Begriff "verschmolzen" bedeutet hierbei, dass die betreffenden Thermoplastmaterialien zumindest oberflächlich auf mindestens die Erweichungstemperatur (im Falle verschiedener Thermoplastmaterialien die größere der beiden Erweichungstemperaturen) gebracht und in diesem Zustand aneinandergefügt wurden, wobei bei diesem Verschmelzungsvorgang eine mehr oder weniger große Diffusion der Materialien der Fügepartner ineinander und somit eine "kohäsive Anbindung" erfolgt.

Die Begriffe "höher schmelzend" und "niedriger schmelzend" sind aufeinander bezogen zu verstehen, und zwar in dem Sinne, dass ein höher schmelzendes Thermoplastmaterial eine höhere Erweichungstemperatur als ein niedriger schmelzendes Thermoplastmaterial besitzt.

Der Begriff "Erweichungstemperatur" bezeichnet hier eine Temperatur, bei welcher das betreffende Material erweicht bzw. aufschmilzt, so dass durch Anfügen eines ebenfalls erweichten bzw. aufgeschmolzenen weiteren Materials eine kohäsive Anbindung geschaffen werden kann. Für die Definition dieser "Erweichungstemperatur" im Sinne der Erfindung können z. B. insbesondere in bereits publizierten Tabellen und Nachschlagewerken zu findende Werte verwendet werden, welche die jeweilige "Glasübergangstemperatur" (für amorphe Thermoplastmaterialien), "Schmelztemperatur" (für teilkristalline Thermoplastmaterialien) bzw. "Schmelztemperatur" (für kristalline Thermoplastmaterialien) darstellen.

Experimentell lässt sich die "Erweichungstemperatur" von Thermoplastmaterialien z. B. insbesondere mit Hilfe von gängigen Methoden wie Thermomechanische Analyse (TMA), Dynamisch-mechanische Analyse (DMA) oder Dynamische Differenzkalorimetrie (DSC) ermitteln.

Im Rahmen der Erfindung ist es keineswegs ausgeschlossen, dass mehrere verschiedene "höher schmelzende Thermoplastmaterialien" und/oder mehrere verschiedene "niedriger schmelzende Thermoplastmaterialien" im Sandwichbauteil vorhanden bzw. im Herstellungsverfahren verarbeitet werden. In diesem Fall sind die Spezifikationen "höher schmelzend" und "niedriger schmelzend" ebenso aufeinander bezogen zu verstehen, und zwar so, dass sämtliche Erweichungstemperaturen von höher schmelzenden Materialien größer sind als jede einzelne der Erweichungstemperaturen von niedriger schmelzenden Materialien.

Nochmals anders ausgedrückt bezeichnen die Begriffe "höher schmelzend" und "niedriger schmelzend" den Umstand, dass eine (nicht unbedingt eindeutig definierte) "Fügetemperatur" angegeben werden kann, derart, dass ein bzw. jedes "höher schmelzende" Thermoplastmaterial eine Erweichungstemperatur besitzt, die größer als die Fügetemperatur ist, wohingegen ein bzw. jedes niedriger schmelzende Thermoplastmaterial eine Erweichungstemperatur besitzt, die niedriger als die Fügetemperatur ist.

Wie oben bereits erläutert besteht eine Besonderheit des erfindungsgemäßen Sandwichbauteils darin, dass die Deckschichten jeweils aus einer Außenlage aus einem faserverstärkten höher schmelzenden Thermoplastmaterial und damit verschmolzen einer Innenlage aus einem niedriger schmelzenden Thermoplastmaterial gebildet sind. Insofern besitzt jede der Deckschichten zwei Lagen, die jedoch miteinander verschmolzen und somit vorteilhaft kohäsiv miteinander verbunden sind, wobei darüber hinaus eine kohäsive Anbindung vorteilhaft auch zwischen den Deckschichten und dem Kern dadurch vorgesehen ist, dass die jeweils aus einem niedriger schmelzenden Thermoplastmaterial gebildeten Außenlagen des Kerns mit den ebenfalls jeweils aus einem niedriger schmelzenden Thermoplastmaterial gebildeten Innenlagen der Deckschichten verschmolzen sind.

Das erfindungsgemäße Sandwichbauteil besitzt somit sämtliche Vorteile der eingangs erläuterten "kohäsiven Anbindung" der Deckschichten an den Kern, vermeidet hierbei jedoch die Gefahr einer nennenswerten Beschädigung der Deckschichten und/oder des Kerns im Rahmen der Herstellung des Sandwichbauteils, weil es für die Aneinanderfügung der Deckschichten und des Kerns zur Schaffung der kohäsiven Anbindung genügt, die Deckschichten und den Kern nur soweit zu erwärmen, dass zwar deren niedriger schmelzende Thermoplastmaterialien erweichen, nicht jedoch deren höher schmelzende Thermoplastmaterialien.

Mit anderen Worten ist das Zusammenfügen der Deckschichten und des Kerns vorteilhaft bei einer Temperatur möglich, bei welcher weder die Außenlagen der Deckschichten noch die Innenstruktur des Kerns erweicht.

In einer Ausführungsform ist vorgesehen, dass die niedriger schmelzenden Thermoplastmaterialien einerseits einer Innenlage einer Deckschicht und andererseits der damit verschmolzenen Außenlage des Kerns identisch sind.

In einer Weiterbildung dieser Ausführungsform sind sämtliche niedriger schmelzende Thermoplastmaterialien, also diejenigen der Innenlagen der beiden Deckschichten und diejenigen der Außenlagen des Kerns, identisch.

Falls, was jedoch weniger bevorzugt ist, die niedriger schmelzenden Thermoplastmaterialien einer Innenlage einer Deckschicht und der damit verschmolzenen Außenlage des Kerns nicht identisch gewählt sind, so ist lediglich deren Kompatibilität im Sinne einer Verschmelzbarkeit (Mischbarkeit) der beiden Materialien sicherzustellen.

In einer bevorzugten Ausführungsform ist vorgesehen, dass die Differenz zwischen einerseits der Erweichungstemperatur des höher schmelzenden Thermoplastmaterials (bzw. im Falle verschiedener solcher Materialien der minimalen Erweichungstemperatur dieser Materialien) und andererseits der Erweichungstemperatur des niedriger schmelzenden Thermoplastmaterials (bzw. im Falle verschiedener solcher Materialien der maximalen Erweichungstemperatur dieser Materialien) größer als 5°C, bevorzugt größer als 50°C, insbesondere größer als 100°C ist.

In einer Ausführungsform ist wenigstens eines der Thermoplastmaterialien gewählt aus der Gruppe bestehend aus ABS (Acrynitril-Butadien-Styrol), PA (Polyamid), PBT (Polybutylenterephthalat), PC (Polycarbonat), PEEK (Polyetheretherketon), PEI (Polyetherimid), PES (Polyethersulfon), PET (Polyethyleneterephthalat), PP (Polypropylen), PPS (Polyphenylensulfid), PPSU (Polyphenylsulfon), PSU (Polysulfon).

In einer insbesondere für Anwendungen des Sandwichbauteils in der Luft- und Raumfahrtindustrie geeigneten Ausführungsform ist wenigstens eines der Thermoplastmaterialien z. B. gewählt aus der Gruppe bestehend aus PEEK, PEI, PES, PPS, PPSU, PSU.

Insbesondere im Hinblick auch auf andere Anwendungen kann z. B. vorgesehen sein, dass wenigstens eines der Thermoplastmaterialien gewählt ist aus der Gruppe bestehend aus ABS, PA, PBT, PC, PP.

Bei den vorstehend beispielhaft genannten Thermoplastmaterialien handelt es sich zum Teil um amorphe und zum Teil um teilkristalline Materialien. Als "Erweichungstemperatur" kann jeweils ein aus der Literatur bekannter Wert herangezogen werden, so z. B. für amorphe Thermoplastmaterialien die Glasübergangstemperatur "TG" und für teilkristalline Thermoplastmaterialien die Schmelztemperatur "TM".

Für die genannten Materialien finden sich in der Literatur z. B. folgende Werte: ABS (amorph, TG = 95°C-105°C), PA11 (teilkristallin, TG= 40-55°C, TM= 180-190°C), PA12 (teilkristallin, TG =40-50°C, TM = 170°C-180°C), PA6 (teilkristallin, TG = 45-80°C, TM = 225°C-235°C), PBT (teilkristallin, TG = 40-60°C, TM = 220°C-230°C), PC (amorph, TG = 140°C-150°C), PEEK (teilkristallin, TG=145°C-155°C, TM = 335°C-345°C), PEI (amorph, TG= 215°C-230°C), PES (amorph , TG= 220°C-230°C), PET (teilkristallin, TG= 70°C-85°C, TM =245°C-260°C), PP (teilkristallin , TG= -20°C - 20°C, TM= 160°C-165°C), PPS (teilkristallin, TG= 85°C-100°C, TM = 275°C-290°C), PPSU (amorph, TG= ca. 220°C), PSU (amorph, TG= 185°C-90°C).

In einer Ausführungsform ist als höher schmelzendes Thermoplastmaterial PEEK (Erweichungstemperatur etwa 340°C) vorgesehen, sei es für wenigstens eine (oder beide) Außenlagen der Deckschichten und/oder die Innenstruktur des Kerns.

In einer Ausführungsform ist als niedriger schmelzendes Thermoplastmaterial PEI (Erweichungstemperatur etwa 220°C) vorgesehen, sei es für wenigstens eine (oder beide) Innenlagen der Deckschichten und/oder wenigstens eine (oder beide) Außenlagen des Kerns.

In einer Ausführungsform ist die Außenlage wenigstens einer der Deckschichten mit Kohlenstofffasern verstärkt. Anstelle von Kohlenstofffasern können jedoch auch andere Verstärkungsfasern vorgesehen sein, z. B. Glasfasern. Zumeist ist es zweckmäßig, die Außenlagen der Deckschichten mit gleichartigen Fasern zu verstärken, also beide Außenlagen z. B. mit Kohlenstofffasern oder mit Glasfasern. Es soll jedoch nicht ausgeschlossen sein, die Außenlagen der beiden Deckschichten mit verschiedenartigem Fasermaterial zu verstärken.

Das Fasermaterial, welches in den Außenlagen der Deckschichten von dem höher schmelzenden Thermoplastmaterial als "Matrixmaterial" umgeben ist, kann jeweils z. B. in Form von einer oder mehrerer Lagen eines Gewebes, Geleges oder Geflechtes vorgesehen sein. Alternativ oder zusätzlich kommt in Betracht, wirr im Matrixmaterial angeordnete "kurze Fasern" vorzusehen.

Das Matrixmaterial kann für beide Deckschichten gleichartig gewählt sein. Es soll jedoch nicht ausgeschlossen sein, für die Außenlagen der beiden Deckschichten verschiedenartige höher schmelzende Thermoplastmaterialien vorzusehen.

In einer Ausführungsform ist als Matrixmaterial für die Außenlage wenigstens einer, insbesondere beider Deckschichten PEEK verwendet.

In einer Ausführungsform ist als Material für die Innenlage wenigstens einer, insbesondere beider Deckschichten PEI verwendet.

In einer Ausführungsform ist für wenigstens eine, insbesondere beide Deckschichten vorgesehen, dass die Dicke der Deckschicht mindestens 0,2 mm, insbesondere mindestens 0,4 mm beträgt.

In einer Ausführungsform ist für wenigstens eine, insbesondere beide Deckschichten vorgesehen, dass die Dicke der Deckschicht höchstens 6 mm, insbesondere höchstens 3 mm beträgt.

In einer Ausführungsform ist für wenigstens eine, insbesondere beide Deckschichten vorgesehen, dass die Dicke der Innenlage mindestens das 0,01-fache, insbesondere mindestens das 0,1-fache der Gesamtdicke der betreffenden Deckschicht beträgt.

In einer Ausführungsform ist für wenigstens eine, insbesondere beide Deckschichten vorgesehen, dass die Dicke der Innenlage höchstens das 0,5-fache, insbesondere höchstens das 0,3-fache der Gesamtdicke der betreffenden Deckschicht beträgt.

In einer Ausführungsform ist der Kern von einer Schaumstoffschicht (Innenstruktur) aus einem höher schmelzenden Thermoplastmaterial mit beiderseits damit verschmolzenen Außenlagen jeweils aus einem niedriger schmelzenden Thermoplastmaterial gebildet.

In einer anderen Ausführungsform ist der Kern ein so genannter Wabenkern. Sandwichbauteile mit Wabenkern sind aus dem Stand der Technik bekannt, etwa mit einem Wabenkern aus Pappe, harzgetränktem Papier, Faserkunststoff oder dünnen Aluminiumfolien.

Wenn bei dem erfindungsgemäßen Sandwichbauteil der Kern als Wabenkern ausgebildet ist, so muss dieser Außenlagen aufweisen, die aus einem niedriger schmelzenden Thermoplastmaterial gebildet sind, und eine wabenförmige Innenstruktur, die wenigstens teilweise aus einem höher schmelzenden Thermoplastmaterial besteht.

Hierfür denkbar wäre beispielsweise eine aus dem höher schmelzenden Thermoplastmaterial (z. B. PEEK) gebildete Wabenstruktur, die beiderseits mit Außenlagen (äußerste Lagen von "Wabenstrukturdeckschichten") aus jeweils einem niedriger schmelzenden Thermoplastmaterial (z. B. PEI) fest verbunden, insbesondere verschmolzen ist.

In einer Ausführungsform sind die beiden Außenlagen des Kerns aus einem identischen niedriger schmelzenden Thermoplastmaterial gebildet.

Gemäß einer bevorzugten Weiterbildung der Ausführung mit einem Wabenkern ist vorgesehen, dass derselbe als eine so genannte Faltwabe bzw. Faltwabenstruktur ausgebildet ist.

Eine Faltwabenstruktur ist dadurch gekennzeichnet, dass diese ausgehend von einem flächigen Körper aus einem plastisch verformbaren Material (z. B. thermoplastische Kunststofffolie) gebildet wurde, indem dieser Körper derart plastisch verformt (einschließlich "gefaltet") wurde, dass damit die Wabenstruktur entsteht. Gegebenenfalls kann dem Verformungs- und Faltprozess auch ein Einbringen von Schnitten in das flächige Material vorangehen.

Für die konkrete Gestaltung einer solchen Faltwabenstruktur bzw. deren Herstellung kann im Rahmen der Erfindung vorteilhaft z. B. auf diesbezüglichen Stand der Technik zurückgegriffen werden. Lediglich beispielhaft seinen hierzu die Patentveröffentlichungen WO 97/03816, WO 00/32382, DE 10 2006 056 353 B3 und DE 10 2008 028 864 B4 genannt.

Der hier verwendete Begriff "Faltwabenstruktur" soll sowohl Strukturen mit vertikal (in "Sandwichrichtung") verlaufenden Zellen- bzw. Wabenwänden als auch Strukturen mit schräg verlaufenden Wänden umfassen. Demgegenüber werden im Stand der Technik (vgl. z. B. DE 10 2006 056 353 B3 und DE 10 2008 028 864 B4) erstere Strukturen, jedenfalls bei im Querschnittt sechseckigen Waben, oftmals auch als "honeycomb"-Strukturen und zweitere Strukturen als Faltwaben bezeichnet.

In einer Ausführungsform ist vorgesehen, dass die Dicke des Kerns mindestens 3 mm, insbesondere mindestens 6 mm oder mindestens 10 mm beträgt.

In einer Ausführungsform ist vorgesehen, dass die Dicke des Kerns höchstens 50 mm, insbesondere höchstens 25 mm beträgt. Im Hinblick auf den Anwendungsfall einer Nutzung des Sandwichbauteils (auch) zur Wärmedämmung ist jedoch auch denkbar, den Kern (insbesondere z. B. mit einer Innenstruktur aus Schaumstoff) mit einer Dicke von mehr als 25 mm vorzusehen, z. B. bis zu einer Dicke von 100 mm oder sogar 200 mm.

In einer Ausführungsform ist für wenigstens eine, insbesondere beide Außenlagen des Kerns vorgesehen, dass die Dicke der aus niedriger schmelzendem Thermoplastmaterial gebildeten Außenlage mindestens das 0,0001-fache, insbesondere mindestens das 0,01-fache der Gesamtdicke des Kerns beträgt.

In einer Ausführungsform ist für wenigstens eine, insbesondere beide Außenlagen des Kerns vorgesehen, dass die Dicke der aus niedriger schmelzendem Thermoplastmaterial gebildeten Außenlage höchstens das 0,1-fache, insbesondere höchstens das 0,05-fache der Gesamtdicke des Kerns beträgt.

Die Besonderheit des erfindungsgemäßen Verfahrens zur Herstellung eines Sandwichbauteils der hier beschriebenen Art besteht darin, die wie beschrieben speziell ausgebildeten Deckschichten mit dem wie beschrieben speziell ausgebildeten Kern zu verschmelzen.

Zum Bereitstellen der Deckschichten kann vorteilhaft jeweils z. B. eine vorgefertigte Außenlage (flächiger Faserverbundwerkstoff) mit einer vorgefertigten Innenlage (z. B. konfektioniertes Thermoplastfolienmaterial) durch Anwendung von Druck und Temperatur, z. B. in einem Formwerkzeug oder z. B. in einem kontinuierlichen Laminierprozess, verschmolzen werden. Für dieses Verschmelzen muss eine Temperatur von mindestens der Erweichungstemperatur des höher schmelzenden Thermoplastmaterials der Außenlage angewandt werden. Alternativ kommt in Betracht, bereits bei der Herstellung des Faserverbundwerkstoffes (Außenlage) die Innenlage sogleich "aufzulaminieren".

Zum Bereitstellen des Kerns kann z. B. in einem ähnlichen Verschmelzungsprozess eine vorgefertigte Schaumstofflage aus einem höher schmelzenden Thermoplastmaterial beiderseits mit Außenlagen eines niedriger schmelzenden Thermoplastmaterials versehen werden.

In einer bevorzugten Ausführungsform wird jedoch zum Bereitstellen des Kerns eine mit einem niedriger schmelzenden Thermoplastmaterial beidseitig beschichtete Folie eines höher schmelzenden Thermoplastmaterials zur Ausbildung einer Faltwabenstruktur umgeformt.

Ein derartiges Verfahren zur Herstellung einer Faltwabenstruktur kann, abgesehen von der im Rahmen der Erfindung hierfür mit einem niedriger schmelzenden Thermoplastmaterial beschichteten Folie eines höher schmelzenden Thermoplastmaterials, vorteilhaft gemäß an sich bekannter Verfahren bewerkstelligt werden. Ein Beispiel hierfür ist das in der WO 00/32382 beschriebenen Verfahren, umfassend folgende Schritte:
- Bereitstellen eines flächigen Körpers aus einem plastisch verformbaren Material,
- Verformen des flächigen Körpers in streifenförmigen Bereichen vieleckig, sinus- oder kreisförmig, wobei die zwischen diesen Bereichen liegenden streifenförmigen Bereich abwechselnd ganz oder gar nicht aus der Ebene des flächigen Ausgangskörpers geformt werden, und
- Falten der vieleckig, sinus- oder kreisförmig plastisch verformten Bereiche gegenüber den streifenförmigen Bereichen um etwa 90°.

Die resultierende Faltwabenstruktur ist dann aus einer Mehrzahl von in Reihen angeordneten Zellen (Waben) gebildet, wobei die Zellen seitliche Zellwände aufweisen, die ringförmig aneinander anschließen und zu den Öffnungsseiten der Zelle hin von Wabendeckschichtebenen begrenzt werden, wobei die Zellen insbesondere in beiden Wabendeckschichtebenen vollständig überbrückt sein können. Die Zellwände können hierbei ganz oder teilweise dauerhaft miteinander verbunden sein.

Wenn bei diesem an sich bekannten Verfahren zur Herstellung einer Faltwabenstruktur im Rahmen der Erfindung als flächiger Ausgangskörper wie erwähnt eine aus verschiedenen Thermoplastmaterialien in Schichten zusammengesetzte Folie verwendet wird, z. B. mit einer Innenlage aus höher schmelzenden Thermoplastmaterial und beiderseits damit verschmolzen Außenlagen aus einem jeweils niedriger schmelzenden Thermoplastmaterial, so ergibt sich ein bei der Erfindung einsetzbarer Faltwabenkern mit Außenlagen (äußerste Lage der Wabenstrukturdeckschichten) aus dem betreffenden niedriger schmelzenden Thermoplastmaterial und einer Innenstruktur, die teilweise aus höher schmelzendem und teilweise aus niedriger schmelzendem Thermoplastmaterial gebildet ist.

Im letzten Schritt des erfindungsgemäßen Verfahrens zur Herstellung eines Sandwichbauteils werden die Innenlagen der Deckschichten mit jeweils einer der Außenlagen des Kerns verschmolzen.

Bei diesem Verschmelzen unter Anwendung von Druck und Temperatur wird bevorzugt eine Temperatur verwendet, die der Erweichungstemperatur des niedriger schmelzenden Thermoplastmaterials entspricht, bzw. im nicht ausgeschlossenen Fall von verschiedenen niedriger schmelzenden Thermoplastmaterialien eine Temperatur, die der maximalen der Erweichungstemperaturen dieser niedriger schmelzenden Thermoplastmaterialen entspricht.

Die angewendete Temperatur ("Fügetemperatur") kann auch höher sein (z. B. um wenigstens 10°C, insbesondere wenigstens 20°C, als die (maximale) Erweichungstemperatur der jeweiligen Fügepartnermaterialien). In diesem Fall ist diese Temperatur jedoch andererseits bevorzugt niedriger (z. B. um wenigstens 10°C, insbesondere wenigstens 20°C) als die Erweichungstemperatur des höher schmelzenden Thermoplastmaterials, bzw. im Falle von verschiedenen höher schmelzenden Thermoplastmaterialien niedriger (z. B. um wenigstens 10°C, insbesondere wenigstens 20°C) als die minimale Erweichungstemperatur dieser höher schmelzenden Materialien.

Erfindungsgemäß ist bei der Bereitstellung des Kerns als eine Faltwabenstruktur durch Umformen einer mit niedriger schmelzendem Thermoplastmaterial beschichteten Folie eines höher schmelzenden Thermoplastmaterials vorgesehen, dass diese Beschichtung in Anpassung an den konkreten Umformprozess nur bereichsweise derart durchgeführt wird, dass das niedriger schmelzende Thermoplastmaterial an der fertigen Faltwabenstruktur nur im Bereich der Faltwabenstrukturdeckschichten vorhanden ist, nicht jedoch im Bereich der Innenstruktur der Faltwabenstruktur. Somit wird die Gefahr beseitigt, dass bei dem finalen Herstellungsschritt für das Sandwichbauteil eine Erweichung der ansonsten in der Innenstruktur vorhandenen niedriger schmelzenden Thermoplastanteile erfolgt.

Die Erfindung wird nachfolgend anhand eines Ausführungsbeispiels mit Bezug auf die beigefügten Zeichnungen weiter beschrieben. Es stellen jeweils schematisch dar:
- **Fig. 1**: ein Vorfertigen einer Deckschicht für ein Sandwichbauteil,
- **Fig. 2**: die vorgefertigte Deckschicht,
- **Fig. 3**: eine Vorfertigung einer Thermoplastfolie zur Verwendung als Ausgangsmaterial zur Herstellung einer Faltwabenstruktur,
- **Fig. 4**: die vorgefertigte Thermoplastfolie,
- **Fig. 5**: eine Vorfertigung der Faltwabenstruktur aus der Thermoplastfolie von Fig. 4,
- **Fig. 6**: eine Fertigung des Sandwichbauteils durch Verschmelzen zweier Deckschichten der in Fig. 2 dargestellten Art mit einem gemäß des Verfahrens von Fig. 5 vorgefertigten Kerns, und
- **Fig. 7**: das fertige Sandwichbauteil.

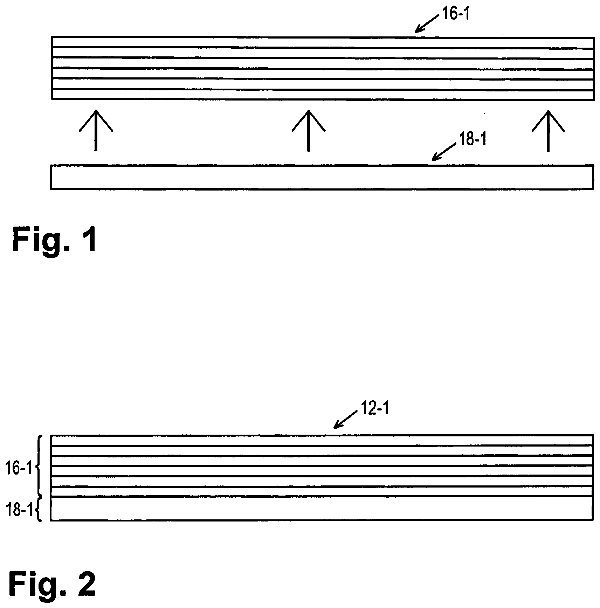

Die Fig. 1 bis 7 veranschaulichen die Herstellung eines Sandwichbauteils gemäß eines Ausführungsbeispiels.

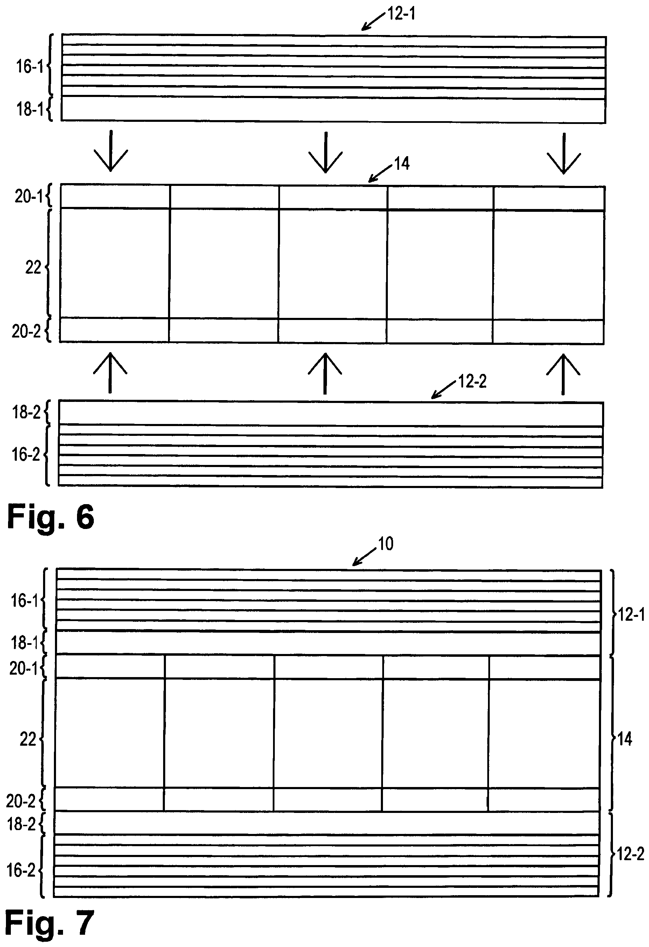

Zunächst wird mit Bezug auf Fig. 7 auf die Gestaltung des fertigen Sandwichbauteils 10 eingegangen. Sodann wird anhand der Fig. 1 bis 6 das zur Herstellung des Sandwichbauteils 10 verwendete Verfahren beschrieben.

Fig. 7 zeigt das fertige Sandwichbauteil 10, umfassend eine erste Deckschicht 12-1, eine zweite Deckschicht 12-2 und einen dazwischen angeordneten Kern 14.

Die Deckschichten 12-1 und 12-2 sind jeweils aus einer Außenlage 16-1 aus einem faserverstärkten "höher schmelzenden Thermoplastmaterial" und damit verschmolzen einer Innenlage 18-1 aus einem "niedriger schmelzenden Thermoplastmaterial" gebildet.

Im dargestellten Beispiel handelt es sich bei der Außenlage 16-1 um einen Faserverbundwerkstoff, bei welchem ein ein- oder mehrlagiges Kohlenstofffasermaterial in einer Matrix von PEEK eingebettet ist. Das PEEK stellt in diesem Beispiel somit das höher schmelzende Thermoplastmaterial der Deckschicht 12-1 dar.

Demgegenüber ist die Innenlage 18-1 im dargestellten Beispiel von PEI gebildet, welches in diesem Beispiel somit das niedriger schmelzende Thermoplastmaterial der Deckschicht 12-1 darstellt.

Der Kern 14 weist den Deckschichten 12-1, 12-2 zugewandte Außenlagen 20-1 und 20-2 auf, die jeweils aus einem niedriger schmelzenden Thermoplastmaterial, hier PEI, gebildet sind und eine wabenartige Innenstruktur 22, die teilweise aus höher schmelzendem Thermoplastmaterial, hier PEEK, und teilweise aus niedriger schmelzendem Thermoplastmaterial, hier PEI, gebildet ist.

Die Innenlagen 18-1, 18-2 der Deckschichten 12-1, 12-2 sind mit jeweils einer der Außenlagen 20-1, 20-2 des Kerns 14 verschmolzen.

Das Sandwichbauteil 10 kann besonders vorteilhaft z. B. als Komponente, insbesondere flächig ausgedehnte Komponente (Rumpfabschnitt, Paneel etc.) im Fahrzeug- oder Flugzeugbau verwendet werden.

Die Fig. 1 bis 6 zeigen einzelne Schritte bzw. Stadien bei der Herstellung des in Fig. 7 dargestellten Sandwichbauteils 10.

In einem ersten Schritt werden die Deckschichten 12-1, 12-2 sowie der Kern 14 vorgefertigt.

Die Vorfertigung der Deckschichten 12-1 und 12-2 erfolgt wie in Fig. 1 beispielhaft für die Deckschicht 12-1 veranschaulicht durch ein miteinander Verschmelzen (kohäsive Anbindung) der zuvor in Faserverbundtechnologie hergestellten Außenlage 16-1 mit der zuvor z. B. durch Extrusion hergestellten Innenlage 18-1. Das resultierende Produkt, die Deckschicht 12-1 ist in Fig. 2 dargestellt. Die Vorfertigung der zweiten Deckschicht 12-2 erfolgt in gleicher Weise.

Abweichend von dem mit den Fig. 1 und 2 veranschaulichten Verfahren kommt in Betracht, bei der Vorfertigung der Außenlage sogleich die Innenlage "aufzulaminieren", d. h. die Einbettung des Fasermaterials in der Außenlage und die Anbindung der Innenlage in einem Schritt, z. B. in einem Formwerkzeug zu bewerkstelligen.

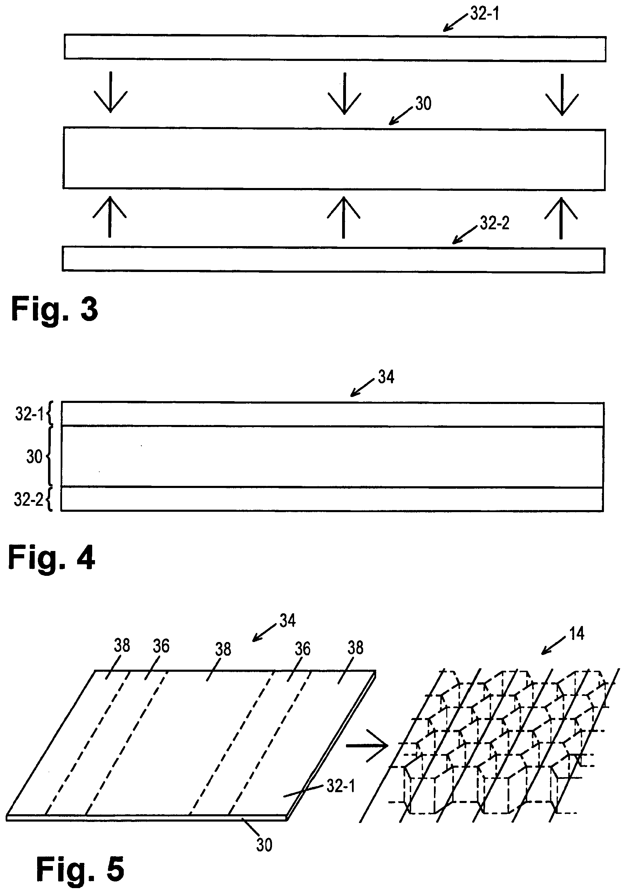

Die Vorfertigung des Kerns 14 ist in den Fig. 3 bis 5 veranschaulicht.

Zunächst wird, wie in Fig. 3 gezeigt, eine vorgefertigte Folie 30 aus höher schmelzendem Thermoplastmaterial beiderseits mit Folien 32-1 und 32-2 eines niedriger schmelzenden Thermoplastmaterials beschichtet. Bevorzugt werden die Folie 30 einerseits und die Folien 32-1, 32-2 andererseits kohäsiv miteinander verbunden, d. h. verschmolzen.

Das resultierende Produkt ist eine Verbundfolie 34, die in Fig. 4 dargestellt ist.

Sodann wird, wie in Fig. 5 symbolisiert, mit der Verbundfolie 34 als Ausgangsmaterial (Fig. 5 links) durch einen Umformprozess eine den Kern 14 darstellende Faltwabenstruktur geschaffen (Fig. 5 rechts).

Im dargestellten Beispiel wird der Kern 14 somit als eine so genannte Faltwabe bzw. Faltwabenstruktur ausgebildet. Was den hierfür verwendeten Umformprozess anbelangt, so kann vorteilhaft auf diesbezüglichen Stand der Technik zurückgegriffen werden.

Im dargestellten Beispiel wurde ein Umformprozess gewählt, mittels welchem insbesondere auch obere und untere "Wabenstrukturdeckschichten" aus dem entsprechend umgeformten (einschließlich gefalteten) Ausgangsmaterial 34 ausgebildet wurden.

Da diese Wabenstrukturdeckschichten (wie auch die Innenstruktur) aus der Verbundfolie 34 gebildet sind und bei dieser Verbundfolie 34 beide Oberflächen von den Folien 32-1, 32-2 eines niedriger schmelzenden Thermoplastmaterials gebildet sind, ist sichergestellt, dass der aus dem Umformprozess resultierende Kern 14 Außenlagen 20-1, 20-2 aus niedriger schmelzendem Thermoplastmaterial besitzt.

Letzteres ist von Bedeutung für den letzten Schritt der Herstellung des Sandwichbauteils, der in Fig. 6 veranschaulicht ist. In diesem Schritt wird der vorgefertigte Kern 14 wie dargestellt zwischen den beiden Deckschichten 12-1, 12-2 angeordnet und werden die Innenlagen 18-1, 18-2 der Deckschichten 12-1, 12-2 mit jeweils einer der Außenlagen 20-1, 20-2 unter Anwendung von Druck und Temperatur verschmolzen. Es resultiert das in Fig. 7 dargestellte fertige Sandwichbauteil 10.

Bei dem oben beschriebenen Ausführungsbeispiel wurde die Folie 30 aus höher schmelzendem Thermoplastmaterial beiderseits vollflächig mit den Folien 32-1 und 32-2 beschichtet.

Daraus resultiert, dass die Innenstruktur des Kerns 14 teilweise aus höher schmelzendem Thermoplastmaterial (Folie 30) und teilweise aus niedriger schmelzendem Thermoplastmaterial (Folien 32-1, 32-2) besteht.

Insofern muss beim finalen Herstellungsschritt für das Sandwichbauteil darauf geachtet werden, dass möglichst keine unerwünschte Erweichung der in der Innenstruktur 22 des Kerns 14 vorhandenen niedriger schmelzenden Thermoplastanteile erfolgt.

Unter diesem Aspekt ist gemäß einer vorteilhaften Weiterbildung der Bereitstellung der Faltwabenstruktur durch Umformen einer mit niedriger schmelzendem Thermoplastmaterial beschichteten Folie eines höher schmelzenden Thermoplastmaterials vorgesehen, dass diese Beschichtung in Anpassung an den konkreten Umformprozess nur bereichsweise derart durchgeführt wird, dass das niedriger schmelzende Thermoplastmaterial an der fertigen Faltwabenstruktur nur im Bereich der Faltwabenstrukturdeckschichten vorhanden ist.

Dementsprechend könnte z. B. das oben beschriebene Ausführungsbeispiel vorteilhaft so modifiziert werden, dass die in den Fig. 4 und 5 veranschaulichte Beschichtung der Folie 30 zu beiden Seiten jeweils nicht vollflächig sondern wie in Fig. 5 gestrichelt eingezeichnet nur in streifenförmigen Bereichen 36 erfolgt, die sich in Verarbeitungsrichtung der Verbundfolie 34 mit nicht-beschichteten Bereichen 38 abwechseln, wobei die in Verarbeitungsrichtung betrachtete Breite der Streifen 36 und 38 derart gewählt ist, dass infolge des Umformprozesses die Innenstruktur 22 des Kerns 14 nur aus den nicht-beschichteten Bereichen 38, also höher schmelzendem Thermoplastmaterial, gebildet wird, wohingegen aus den beschichteten Bereichen 36, im Verbund mit der Folie 30, die Deckschichten 20-1 und 20-2 des Kerns 14 gebildet werden.

## Patentansprüche

1. Sandwichbauteil mit einer ersten Deckschicht (12-1), einer zweiten Deckschicht (12-2) und einem dazwischen angeordneten Kern (14),
wobei die Deckschichten (12-1, 12-2) jeweils aus einer Außenlage (16-1, 16-2) aus einem faserverstärkten höher schmelzenden Thermoplastmaterial und damit verschmolzen einer Innenlage (18-1,18-2) aus einem niedriger schmelzenden Thermoplastmaterial gebildet sind,
wobei der Kern (14) Außenlagen (20-1, 20-2) aufweist, die jeweils aus einem niedriger schmelzenden Thermoplastmaterial gebildet sind, und eine Innenstruktur (22), die ganz oder teilweise aus einem höher schmelzenden Thermoplastmaterial gebildet ist,
wobei die Innenlagen (18-1, 18-2) der Deckschichten (12-1, 12-2) mit jeweils einer der Außenlagen (20-1, 20-2) des Kerns (14) verschmolzen sind,
**dadurch gekennzeichnet, dass** der Kern (14) als eine Faltwabenstruktur durch Umformen einer mit einem niedriger schmelzenden Thermoplastmaterial (32-1, 32-2) beschichteten Folie (30) eines höher schmelzenden Thermoplastmaterials bereitgestellt ist, wobei diese Beschichtung (32-1, 32-2) in Anpassung an den konkreten Umformprozess nur bereichsweise derart durchgeführt ist, dass das niedriger schmelzende Thermoplastmaterial (32-1, 32-2) an der fertigen Faltwabenstruktur nur im Bereich der Faltwabenstrukturdeckschichten vorhanden ist, nicht jedoch im Bereich der Innenstruktur (22) der Faltwabenstruktur.

2. Sandwichbauteil nach Anspruch 1, wobei die niedriger schmelzenden Thermoplastmaterialien einerseits einer Innenlage (18-1, 18-2) einer Deckschicht (12-1, 12-2) und andererseits der damit verschmolzenen Außenlage (20-1, 20-2) des Kerns (14) identisch sind.

3. Sandwichbauteil nach einem der vorangehenden Ansprüche, wobei wenigstens eines der Thermoplastmaterialien ausgewählt ist aus der Gruppe bestehend aus ABS, PA, PBT, PC, PEEK, PEI, PES, PET, PP, PPS, PPSU, PSU.

4. Verfahren zur Herstellung eines Sandwichbauteils (10) nach einem der vorangehenden Ansprüche, umfassend die Schritte:
a) Bereitstellen der ersten Deckschicht (12-1), der zweiten Deckschicht (12-2) und des Kerns (14),
b) Anordnen des Kerns (14) zwischen den Deckschichten (12-1, 12-2), und
c) Verschmelzen der Innenlagen (18-1, 18-2) der Deckschichten (12-1, 12-2) mit jeweils einer der Außenlagen (20-1, 20-2) des Kerns (14)
**dadurch gekennzeichnet, dass** in Schritt a) zum Bereitstellen des Kerns (14) eine mit dem niedriger schmelzenden Thermoplastmaterial (32-1, 32-2) beschichtete Folie (30) eines höher schmelzenden Thermoplastmaterials zur Ausbildung einer Faltwabenstruktur umgeformt wird, wobei die Folie (30) des höher schmelzenden Thermoplastmaterials mit dem niedriger schmelzenden Thermoplastmaterial (32-1, 32-2) nur bereichsweise derart beschichtet wird, dass infolge des nachfolgenden Umformprozesses die Innenstruktur (22) des Kerns (14) aus den nicht-beschichteten Bereichen (38) und die Außenlagen (20-1, 20-2) des Kerns (14) aus den beschichteten Bereichen (36) ausgebildet werden.

5. Verfahren nach Anspruch 4, wobei im Schritt a) zum Bereitstellen der Deckschichten (12-1, 12-2) jeweils eine vorgefertigte Außenlage (16-1, 16-2) mit einer vorgefertigten Innenlage (18-1, 18-2) verschmolzen wird.

## Claims

1. Sandwich component with a first cover layer (12-1), a second cover layer (12-2) and a core (14) arranged therebetween,
wherein the cover layers (12-1, 12-2) each consist of an outer layer (16-1, 16-2) of a fibre-reinforced higher-melting thermoplastic material and an inner layer (18-1, 18-2) fused thereto, are formed from a lower melting thermoplastic material,
wherein the core (14) having outer layers (20-1, 20-2) each formed from a lower melting thermoplastic material, and an inner structure (22) formed wholly or partly from a higher melting thermoplastic material,
wherein the inner layers (18-1, 18-2) of the cover layers (12-1, 12-2) are each fused to one of the outer layers (20-1, 20-2) of the core (14),
**characterized in that** the core (14) is provided as a folded honeycomb structure by forming a sheet (30) of a higher melting thermoplastic material coated with a lower melting thermoplastic material (32-1, 32-2), wherein this coating (32-1, 32-2), in adaptation to the specific forming process, is carried out only in regions in such a way that the lower-melting thermoplastic material (32-1, 32-2) is present on the finished folding honeycomb structure only in the region of the folding honeycomb structure cover layers, but not in the region of the inner structure (22) of the folding honeycomb structure.

2. Sandwich component according to claim 1, wherein the lower-melting thermoplastic materials are identical on the one hand to an inner layer (18-1, 18-2) of a cover layer (12-1, 12-2) and on the other hand to the outer layer (20-1, 20-2) of the core (14) fused thereto.

3. Sandwich component according to one of the preceding claims, wherein at least one of the thermoplastic materials is selected from the group consisting of ABS, PA, PBT, PC, PEEK, PEI, PES, PET, PP, PPS, PPSU, PSU.

4. Method for producing a sandwich component (10) according to any of the foregoing claims, comprising the steps of:
a) Providing the first cover layer (12-1), the second cover layer (12-2) and the core (14),
b) Arranging the core (14) between the cover layers (12-1, 12-2), and
c) Fusing the inner layers (18-1, 18-2) of the cover layers (12-1, 12-2) each with one of the outer layers (20-1, 20-2) of the core (14)
**characterized in that** in step a) to provide the core (14), a higher melting thermoplastic material film (30) coated with the lower melting thermoplastic material (32-1, 32-2) is formed to form a folding honeycomb structure, wherein the higher melting thermoplastic material film (30) is coated with the lower melting thermoplastic material (32-1, 32-2) is coated only in certain areas in such a way that as a result of the subsequent forming process the inner structure (22) of the core (14) is formed from the non-coated areas (38) and the outer layers (20-1, 20-2) of the core (14) are formed from the coated areas (36).

5. Method according to claim 4, wherein in step a) for providing the cover layers (12-1, 12-2) a prefabricated outer layer (16-1, 16-2) is fused to a prefabricated inner layer (18-1, 18-2).

## Revendications

1. Composant sandwich avec une première couche de recouvrement (12-1), une deuxième couche de recouvrement (12-2) et un noyau (14) disposé entre celles-ci,
dans lequel les couches de recouvrement (12-1, 12-2) sont constituées chacune d'une couche extérieure (16-1, 16-2) en matière thermoplastique à point de fusion élevé renforcée par des fibres et d'une couche intérieure (18-1, 18-2) fusionnée avec celle-ci, sont formés d'une matière thermoplastique à bas point de fusion,
dans lequel le noyau (14) ayant des couches extérieures (20-1, 20-2) chacune formée d'une matière thermoplastique à bas point de fusion, et une structure intérieure (22) formée entièrement ou partiellement d'une matière thermoplastique à haut point de fusion,
dans lequel les couches intérieures (18-1, 18-2) des couches de recouvrement (12-1), 12-2) sont chacune fusionnées à l'une des couches extérieures (20-1, 20-2) du noyau (14),
**caractérisé en ce que** le noyau (14) est fournie sous la forme d'une structure alvéolaire pliée en formant une feuille (30) d'un matériau thermoplastique à point de fusion plus élevé revêtue d'un matériau thermoplastique à point de fusion plus bas (32-1, 32-2), dans lequel ce revêtement (32-1, 32-2), en adaptation au procédé de formage spécifique, est réalisé uniquement par zones de telle sorte que la matière thermoplastique à bas point de fusion (32-1, 32-2) ne soit présente sur la structure alvéolaire pliable finie que dans la zone des couches de couverture de la structure alvéolaire pliable, mais pas dans la zone de la structure interne (22) de la structure alvéolaire pliable.

2. Composant sandwich selon la revendication 1, dans lequel les matières thermoplastiques à bas point de fusion sont identiques d'une part à une couche intérieure (18-1, 18-2) d'une couche de recouvrement (12-1, 12-2) et d'autre part à la couche extérieure (20-1, 20-2) du noyau (14) fusionné à celle-ci.

3. Composant sandwich selon l'une des revendications précédentes, dans lequel au moins l'une des matières thermoplastiques est choisie dans le groupe constitué par ABS, PA, PBT, PC, PEEK, PEI, PES, PET, PP, PPS, PPSU, PSU.

4. Méthode de production d'un composant de sandwich (10) selon l'une des revendications précédentes, comprenant les étapes suivantes
a) fournir la première couche de recouvrement (12-1), la deuxième couche de recouvrement (12-2) et le noyau (14),
b) en plaçant le noyau (14) entre les couches de recouvrement (12-1, 12-2), et
c) fusion des couches internes (18-1, 18-2) des couches de recouvrement (12-1, 12-2) chacun avec une des couches extérieures (20-1, 20-2) du noyau (14)
**caractérisé en ce que** dans l'étape a) pour fournir le noyau (14), un film de matière thermoplastique à point de fusion plus élevé (30) revêtu de la matière thermoplastique à point de fusion plus bas (32-1, 32-2) est formé pour former une structure alvéolaire pliable, dans laquelle le film de matière thermoplastique à point de fusion plus élevé (30) est revêtu de la matière thermoplastique à point de fusion plus bas (32-1), 32-2) n'est revêtue que dans certaines zones de telle manière que, suite au processus de formage ultérieur, la structure interne (22) du noyau (14) est formée à partir des zones non revêtues (38) et les couches externes (20-1, 20-2) du noyau (14) sont formées à partir des zones revêtues (36).

5. Procédé selon la revendication 4, dans lequel, à l'étape a), pour fournir les couches de recouvrement (12-1, 12-2), une couche extérieure préfabriquée (16-1, 16-2) est fusionnée à une couche intérieure préfabriquée (18-1, 18-2) dans chaque cas.
